# EUROPEAN PATENT APPLICATION

(11) **EP 3 639 978 A1**
(43) Date of publication of application: **22.04.2020**
(21) Application number: 18214649.8
(22) Date of filing: 20.12.2018
(51) Int. Cl.: B25B 27/00, B21J 15/10

(54) **ELECTRICALLY-DRIVEN RIVET NUT TOOL HAVING MULTI-STAGE AND ADJUSTABLE STROKE AND PULL-RIVETING FORCE**

(30) Priority: 18.10.2018 CN 201811216864
(71) Applicant: Shanghai Anzi Industrial Co., Ltd, Qingpu District Shanghai 201703 (CN); Shanghai Well-Done Machinery Manufacturing Co., Ltd., Shanghai 200949 (CN)
(72) Inventor: WU, Mingxiang, Shanghai, 200949 (CN)
(74) Representative: Lermer, Christoph

(57) **Abstract**

The present invention provides an electrically-driven rivet nut tool having a multi-stage and adjustable stroke and pull-riveting force. The electrically-driven rivet nut tool has a selection button (9) for selecting a stroke value and a pull-riveting force from multiple stages. A control processor (5) receives the selected stroke value and pull-riveting force. An extension plate is mounted in a housing of the tool. A count sensor (4) is provided on the extension plate. The count sensor is positioned correspondingly to sensing blocks (3) on a primary large gear (2) and is connected to the control processor. The count sensor transmits the number of signals indicative of the rotation of the sensing blocks to the control processor in real time, and the control processor compares the number of signals with a preset count value and controls a motor to rotate backward to return a pull screw to the original position if the number of signals exceeds the preset count value. The control processor (5) measures the current value for pull-riveting in real time, and controls the motor to rotate backward to return the pull screw to the original position if the current value exceeds a preset current value. The present invention has the advantages that the stroke and the pull-riveting force can be adjusted according to actual needs, so that the efficiency is improved, the power energy is saved, and the service life is prolonged.

## Description

### Technical Field of the Invention

The present invention relates to a quick riveting tool, and in particular to an electrically-driven rivet nut tool having a multi-stage and adjustable stroke and pull-riveting force.

### Background of the Invention

For common electrically-driven rivet nut tools, the operating stroke is fixed. However, in the practical riveting operations, not all riveting strokes are required to be so long. In some riveting operations, only half of the stroke or shorter is desired. In this case, generally, the excessive idle stroke beyond the operating stroke is consumed by mechanical adjustment. The stroke, when exceeding the actual need too much, will influence the operating efficiency, waste the power energy, and shorten the service life of the riveting tool. In addition, the rivet nuts of different specifications are greatly different in the required riveting force. A too large riveting force will damage rivet nuts of small specifications, and the power energy is also wasted. Those defects need to be improved in the present application.

### Summary of the Invention

A technical problem to be solved by the present invention is to provide an electrically-driven rivet nut tool having a multi-stage and adjustable stroke and pull-riveting force.

To solve the above technical problem, the present invention provides an electrically-driven rivet nut tool having a multi-stage and adjustable stroke and pull-riveting force, wherein the rivet nut tool has a selection button for selecting a stroke value and a pull-riveting force value from multiple stages; a control processor receives the input selected stroke value and pull-riveting force value; an extension plate is mounted in a housing of the rivet nut tool; a count sensor is provided on the extension plate; the count sensor is positioned correspondingly to sensing blocks on a primary large gear and is connected to the control processor; the count sensor transmits the number of signals indicative of the rotation of the sensing blocks to the control processor in real time, and the control processor compares the number of signals with a preset count value for the preset stroke and controls a motor to rotate backward to return a pull screw to the original position if the number of signals exceeds the preset count value; and, the control processor converts the pull-riveting force into a current value, measures the current value for pull-riveting in real time, and controls the motor to rotate backward to return the pull screw to the original position if the real-time current value exceeds a preset current value.

One triggering of the count sensor is considered as one count unit of the stroke, the sensing blocks trigger the count sensor, the count sensor accumulates the count units and transmits the accumulated count value to the control processor, and the processor converts the count value to the stroke value.

The sensing blocks are fixed in grooves formed on a surface of the primary large gear.

The present invention has the following advantages. 1) The stroke and the pull-riveting force of the electrically-driven rivet nut tool can be adjusted according to actual needs, so that the operating efficiency is improved, the power energy is saved, and the service life of both batteries and the tool is prolonged.

### Brief Description of the Drawings

The accompanying drawings constituting a part of the present application are used for providing further understanding of the present invention. Illustrative embodiments of the present invention and descriptions thereof are used for explaining the present invention, rather than constituting any inappropriate limitations to the present invention. In the drawings:
Fig. 1 is a schematic structure diagram of the present invention; and

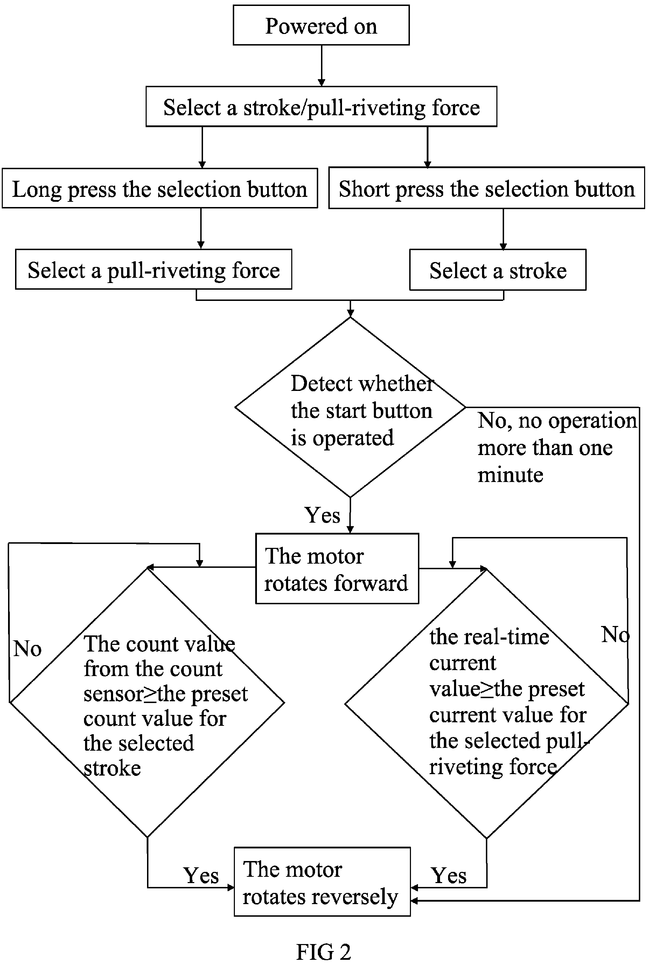

Fig. 2 is a flowchart of the present invention,
in which:
1: pull screw;
2: primary large gear;
3: sensing block;
4: count sensor;
5: control processor;
6: stroke/pull-riveting force display panel;
7: stroke indicator;
8: pull-riveting force indicator;
9: stroke/pull-riveting force selection button;
10: start button; and
11: motor.

### Detailed Description of the Invention

The embodiments of the present invention will be described below in detail with reference to the accompanying drawings.

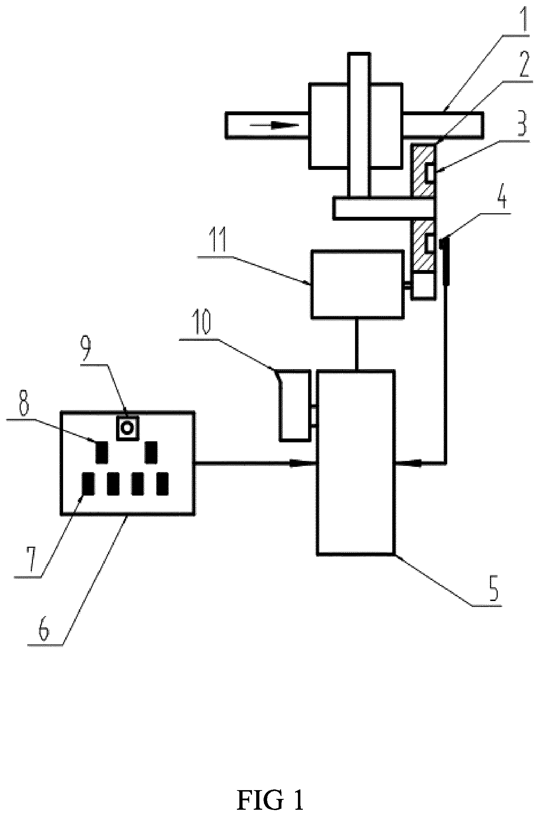

As shown in Fig. 1, the present invention provides an electrically-driven rivet nut tool having a multi-stage and adjustable stroke and pull-riveting force. The rivet nut tool has a selection button 9 for selecting a stroke value from multiple stages of 2 mm, 4 mm, 6 mm and 8 mm, and a pull-riveting force value from 16000 N and 24000 N. A control processor 5 receives the input selected stroke value and pull-riveting force value. An extension plate is provided in a housing of the rivet nut tool, and a count sensor 4 is mounted on the extension plate. The count sensor 4 is positioned correspondingly to sensing blocks 3 on a primary large gear 2 and is connected to the control processor 5.

The stroke value in each stage corresponds to a preset count value in the control processor 5. In this embodiment, the preset count value corresponding to the stroke value of 2 mm is 24, the preset count value corresponding to the stroke value of 4 mm is 48, the preset count value corresponding to the stroke value of 6 mm is 72, and the preset count value corresponding to the stroke value of 8 mm is 96.The count sensor 4 is triggered by the rotation of the sensing blocks 3, and the control processor 5 compares the number of signals transmitted by the count sensor 4 with the preset count value for the selected stroke. When a start button 10 of the electrically-driven rivet nut tool is pressed down, a motor 11 is activated to move forward, and a pull screw 1 moves in a direction indicated by the arrow in Fig. 1. When the number of signals transmitted by the count sensor 4 reaches the preset count value for the selected stroke, the control processor 5 changes the direction of current supplied to the motor 11, so that the motor 11 rotates reversely and the pull screw 11 returns to the original position.

The pull-riveting force of 16000 N and the pull-riveting force of 24000 N correspond to two preset current values (i.e., 20 A and 30 A) in the control processor 5, respectively. When the start button 10 of the electrically-driven rivet nut tool is pressed down, the motor 11 is activated to rotate forward, and the pull screw 1 moves in the direction indicated by the arrow in Fig. 1. When the current value measured by the control processor 5 is greater than the preset current value for the selected pull-riveting force, the control processor 5 changes the direction of current supplied to the motor, so that the motor 11 rotates reversely and the pull screw 11 returns to the original position.

One triggering of the count sensor 4 is considered as one count unit of the stroke. The sensing blocks 3 trigger the count sensor 4. The count sensor 4 accumulates the count units and transmits the accumulated count value to the control processor 5. The control processor 5 compares the received count value with the preset count value to determine whether the selected stroke value is reached.

The sensing blocks 3 are fixed in grooves formed on a surface of the primary large gear 2. In order to improve the accuracy of detection, there are two to five sensing blocks 3. The distance from the center of each sensing block 3 to the center of the primary large gear 2 is equal, and the sensing blocks 3 are uniformly distributed in the circumferential direction.

The foregoing description merely shows preferred embodiments of the present invention and is not intended to limit the present invention. Various modifications and variations can be made to the present invention by a person of ordinary skill in the art. Any modifications, equivalent replacements and improvements made without departing from the spirit and principle of the present invention shall fall into the protection scope of the present invention.

## Claims

1. An electrically-driven rivet nut tool having a multi-stage and adjustable stroke and pull-riveting force, **characterized in that** the rivet nut tool has a selection button for selecting a stroke value and a pull-riveting force from multiple stages; a control processor receives the input selected stroke value and pull-riveting force value; an extension plate is mounted in a housing of the rivet nut tool; a count sensor is provided on the extension plate; the count sensor is positioned correspondingly to sensing blocks on a primary large gear and is connected to the control processor; the count sensor transmits the number of signals indicative of the rotation of the sensing blocks to the control processor in real time, and the control processor compares the number of signals with a preset count value for the preset stroke and controls a motor to rotate backward to return a pull screw to the original position if the number of signals exceeds the preset count value; and, the control processor converts the pull-riveting force into a current value, measures the current value for pull-riveting in real time, and controls the motor to rotate backward to return the pull screw to the original position if the real-time current value exceeds a preset current value.

2. The electrically-driven rivet nut tool having a multi-stage and adjustable stroke and pull-riveting force according to claim 1, **characterized in that** one triggering of the count sensor is considered as one count unit of the stroke, the sensing blocks trigger the count sensor, the count sensor accumulates the count units and transmits the accumulated count value to the control processor, and the processor compares the received count value with the preset count value to determine whether the selected stroke value is reached.

3. The electrically-driven rivet nut tool having a multi-stage and adjustable stroke and pull-riveting force according to claim 1, **characterized in that** the sensing bloc are fixed in grooves formed on a surface of the primary large gear.
